# EUROPEAN PATENT SPECIFICATION

(11) **EP 1 421 736 B1**
(45) Date of publication and mention of the grant of the patent: **01.06.2005**
(21) Application number: 01971978.0
(22) Date of filing: 29.08.2001
(51) Int. Cl.: H04L 12/18, H04Q 7/22, H04L 29/06

(54) **METHOD AND DEVICE FOR MULTICASTING IN A UMTS NETWORK**
VERFAHREN UND VORRICHTUNG ZUR MEHRFACHSENDUNG IN EINEM UMTS-NETZWERK
PROCEDE ET DISPOSITIF DE MULTIDIFFUSION DANS UN RESEAU DU SYSTEME UNIVERSEL DE TELECOMMUNICATION MOBILE

(43) Date of publication of application: 26.05.2004
(73) Proprietor: Telefonaktiebolaget LM Ericsson (publ), 164 83 Stockholm (SE)
(72) Inventor: HUNDSCHEIDT, Frank, NL-6464 GC Kerkrade (NL); HAMELEERS, Heino, NL-6471 CZ Kerkrade (NL); LOHMAR, Thorsten, 52062 Aachen (DE); KELLER, Ralf, 52146 Wuerselen (DE)
(74) Representative: HOFFMANN - EITLE
(86) International application number: PCT/EP2001/009952
(87) International publication number: WO 2003/019860

(56) References cited:
- WO-A-00/57601
- WO-A-00/69163
- WO-A-99/59355
- ONOE Y ET AL: "Media scaling applied to multicast communications" COMPUTER COMMUNICATIONS, BUTTERWORTHS & CO. PUBLISHERS LTD, GB, vol. 21, no. 14, 15 September 1998 (1998-09-15), pages 1226-1243, XP004146583 ISSN: 0140-3664

## Description

### [Field of the invention]

The present application relates to a network entity arranged to be connected to a communication network, and to a control method for such an entity.

### [Background of the invention]

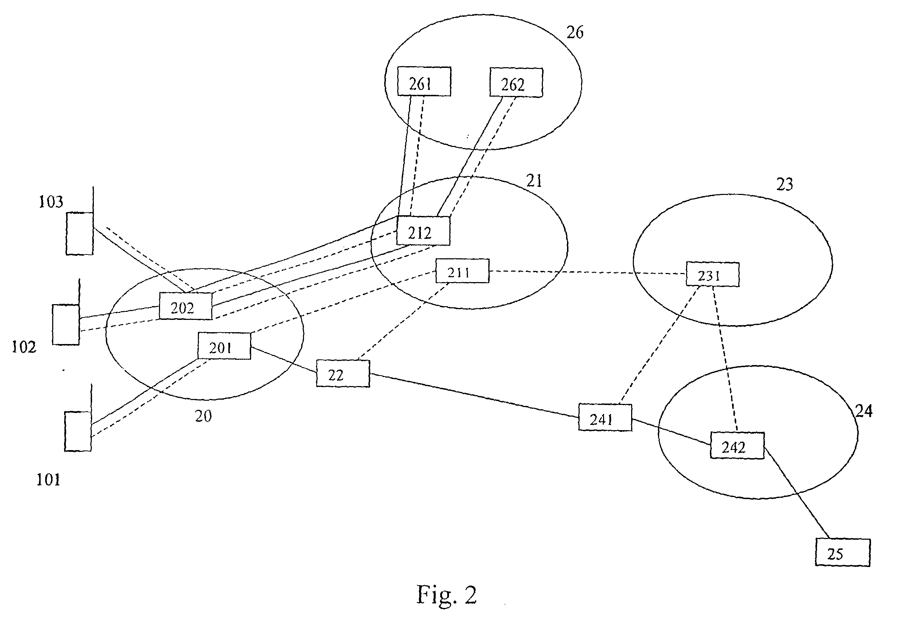

As an example of a communication network, Fig. 2 shows a schematic representation of a mobile communication network consisting of an access network part 20 for providing mobile stations 101, 102, and 103 access to the communication network, a control network part 21 for controlling communications to and from the mobile stations, and a gateway 22 for the handling of call content between the mobile communication network and one or more other networks, where Fig. 2 shows one telephone network 24 as an example. In Fig. 2 dashed lines represent control signalling, and solid lines represent content transmission.

Fig. 2 also shows a control network 23 associated with telephone network 24, and a server network 26, which may or may not be a part of the mobile communication network. In other words, the server network could e.g. be a service network part of the mobile communication system, or could be a separate network, such as the Internet.

As an example of a communication, Fig. 2. shows a communication between a mobile terminal 101 and a terminal 25 associated with the telephone network 24, where the call content is passed from the mobile terminal 101 to a gateway support node 201 in the access network 20, then to the gateway 22, to a gateway 241 associated with the telephone network 24, to a gateway support node 42 associated with the telephone network 24, and then to the telephone terminal 25. It may be noted that the content can be of any known type, such as video, audio or data.

This communication between terminals 101 and 25 is controlled on the basis of a control entity 211 in the control network 21 on the side of the mobile communication network, and a control entity 231 in the control network 23 on the side of telephone network 24. Control signalling is exchanged between these entities 211 and 231, and entity 211 exchanges control signalling with gateway support node 201 and gateway 22, whereas control entity 231 exchanges control signalling with gateway 241 and gateway support 242.

Fig. 2 also shows further examples of communications, namely call transmissions from two servers 261, 262 in network 26 to two mobile stations 102 and 103 are handled by an entity 212 in control network 21 and a support node 202 in access network 20. In these example, call content and control signalling are handled by the same entities.

It should be understood that the illustration in Fig. 2 is schematic and indicates a logical structure, where said logical structure may or may not be reflected by a corresponding physical structure. In other words, entities shown as being separated in Fig. 2 can in fact be physically separated or may be provided in one location in a single physical unit, and entities shown as a single element in Fig. 2 may be provided as single physical units, or may be spread out over a plurality of physical units.

An example of a network having the architecture shown in Fig. 2 is a mobile communication network according to 3GPP (3rd Generation Partnership Project) technical specification 23.002 V5.3.0 (2001-06), available at http://www.3gpp.org.

In the nomenclature of 3GPP, the first network part 20 for providing access could be the so-called Access Network, and the support nodes 201, 202 could be GGSNs(Gateway GPRS Support Nodes). Furthermore, the second network part 21 that provides control functions could be embodied by the so-called Core Network, and the entities 211, 212 could be one or more CSCFs (Call State Control Functions), The mobile stations 101, 102, 103 could then e.g. be mobile stations operating according to the Universal Mobile Telephone communication System (UMTS).

WO 99/59355 A describes point-to-multipoint (PTM) transmissions in a mobile communication system. It is described that GPRS supports PTM transmissions, and that a PTM service centre (PTM-SC) is provided for implementing corresponding features in the GPRS network. There are two PTM services supported by GPRS, namely PTM multicast and PTM group. In a PTM group call, only a mobile station registered to the group can receive messages of the group call. The PTM service centre is responsible for routing messages, namely it handles scheduling, transmission and re-transmission of messages.

WO 00/57601 A describes a network element for forwarding multicast messages. This document describes a specific way of forwarding multicast messages received from an external network through a packet radio network. In order to be able to use the existing packet radio network with as little change as possible, subscriber-specific information defining multicast messages to be received by subscribers is stored in the GGSN. Based on this information, point-to-point connections are established between the multicast content provider and a subscriber that belongs to the corresponding multicast group. In this way the GGSN manages multicast messages using existing capabilities.

"Media scaling applied to multicast communications" by Yuko Oneo et al. (XP004146583 ISSN: 0140-3664) is a paper describing distributed multimedia environments and ways to support different receiving capacities of group members and their requested services. Multicast and broadcast functions for continuous media objects are mentioned. Also, it is mentioned that transmitted data can be encoded hierarchically at application layer levels according to QoS levels.

WO 00/69163 A describes a system for targeting advertising to specific subgroups of a larger group. Such subgroups can be formed by using multicast addresses. The targeted advertisements can be transferred simultaneously with programming and inserted locally, or may be inserted at a centralized distribution point, such as a router. An apparatus is presented which receives n program streams and m advertisements, and creates p presentation streams containing targeted advertisements, where p > n.

### [Object of the invention]

The object of the invention is to improve the capabilities of a communication network by providing an improved network entity.

### [Summary of the invention]

This object is solved by a network entity having the features of claim 1, and by a control method described in claim 16. Advantageous embodiments are described in the dependent claims.

According to the present invention, a network entity for communication networks is provided, where said network entity is arranged to
- control the receipt and generation of multicast transmissions in the communication network, a multicast transmission being a transmission that carries transmission content and a multicast group identifier, said multicast group identifier being an identifier for a group of destinations associated with the multicast transmission,
- conduct a first procedure for determining destinations for a multicast transmission on the basis of a multicast group identifier, and
- conduct a second procedure for handling a multicast transmission on the basis of the outcome of the first procedure, where the second procedure comprises routines for routing and/or processing and /or terminating and/or originating multicast transmissions.

The network entity therefore is a multicast management entity that may have the function of
- a multicast router, such as multicast group management for the routing as such and multicast data processing, and/or
- a multicast server, such as the originating capability of being a potential multicast source (for example in the case of multicast services in which a multicast transmission is received and stored, in order to be forwarded later, or a unicast transmission is received and changed into a multicast transmission since the multicast management entity decides or was ordered to send the transmission to multiple users), or the processing capabilities of generating, manipulating and/or mixing multicast content, and/or
- a multicast proxy, such as the terminating and processing capabilities of e.g. adapting multicast content to radio interface characteristics (in the case of a mobile communication network) and capabilities and end-user (equipment) capabilities and preferences.

Preferable, the network entity of the present invention is applied to a mobile communication network, but it should be noted that it can be applied to any type of communication network, i.e. wireless, wire-bound, fixed, satellite, etc..

Consequently, according to the present application, multicast capabilities may be added to a communication network, such that the network operator can participate in the providing and managing of multicast services and specific sessions for each service, which means that e.g. group specific admission control and group specific charging can be implemented, and the overall transmission efficiency in the communication network can be greatly increased, as the multicast managing and processing facilities enable the network operator to be aware of multicast services and multicast sessions, in order to better allocate and exploit network resources.

### [Brief description of Figures]

Further advantages of the present invention shall become evident from the study of the following detailed description of preferred embodiments of the invention, with reference to the enclosed figures, in which:
- Fig. 1: shows a schematic representation of an embodiment of the present invention;
- Fig. 2: shows a schematic representation of a mobile communication network architecture; and
- Fig. 3: shows an illustrative representation of the handling of multicast transmission content that comprises separable parts, in accordance with an embodiment of the present invention.

### [Detailed description of embodiments]

In the following, preferred embodiments of the present invention shall be described in the context of a network entity applied in a mobile communication network. However, it should be understood that the network entity of the present invention can be applied in the context of any type of communication network, and that the application in a mobile communication network is only a preferred example.

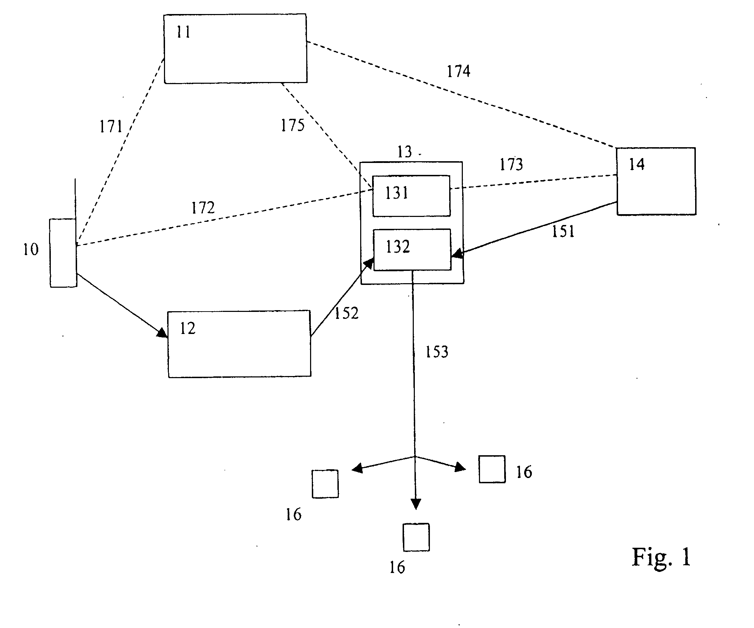

Fig. 1 shows a schematic representation of a communication network, in which the present invention may be applied. The figure shows a mobile station 10, a basic call control entity 11, a gateway support node 12, a multicast management entity 13, which is an embodiment of the network entity of the present invention, and a multicast source 14. Similar to Fig. 2, solid lines represent content transmissions, whereas dashed lines represent control signalling. Also, it should be noted that the structure shown in Fig. 1 is a logical structure, such that the units shown as separate elements in Fig. 1 may or may not be physically separated, and elements shown as units may or may not be physical units, i.e. may be located in one place or can be spread out over several physical units.

The basic call control entity 11 and the multicast management entity 13 both belong to the general control part of the mobile communication network, e.g. network part 21 shown in Fig. 2. The basic call control entity 11 is arranged to handle communications to and from individual mobile stations accessing the mobile communications system. The corresponding functions of call control entity 11 are e.g. call set-up and termination, state/event management, interaction with other network entities (e.g. the multicast management entity 13) for supporting specific services, reporting of call events for billing, auditing, interception, etc.. It may be noted that the access network is not explicitly shown for reasons of simplicity.

The multicast management entity 13 is arranged to control the receipt of multicast transmissions from an appropriate source. As shown in Fig. 1, such a source can e.g. be a server 14 sending out a multicast transmission 151. It may be noted that the server 14 can be a part of the mobile communication network or can also be outside of the mobile communication network. It should be noted that one or more multicast routers could be interposed between the multicast management entity 13 and the server 14, which routers are not shown for simplicity. As shown in Fig. 1, the source of the multicast transmission could also be a mobile station 10 sending out a multicast transmission 152.

The multicast management entity 13 is furthermore arranged to also generate and/or originate multicast transmissions. The generation can be based upon a processing of received (multicast and/or unicast) transmissions, or the multicast management entity 13 can also be an original server that itself may originate its own multicast transmissions or e.g. change a unicast transmission into a multicast transmission based on additional information.

The multicast management entity 13 is arranged to conduct a procedure for determining destinations for a multicast transmission on the basis of a multicast group identifier. An example of a multicast group identifier is the multicast address known from the Internet Group Management Protocol (IGMP) of RfC 112. Generally speaking, a multicast group identifier is any indicator suitable for identifying a group of destinations.

The multicast management entity 13 is furthermore arranged to conduct a procedure for handling a multicast transmission on the basis of the outcome of the destination determination procedure, i.e. on the basis of the determined destinations. The handling of a multicast transmission can consist in a simple routing of a received transmission 151, 152, in the processing of a received multicast transmission, in the terminating of a received multicast transmission, or in the originating of a new multicast transmission. This is exemplified by arrow 153 in Fig. 1, which is an output of the multicast management entity 13. The shown destinations 16 can be entities inside or outside of the mobile communication networks i.e. can be mobile stations that are presently accessing the mobile communication network (e.g. home network subscribers or roaming subscribers), or can be some other entity in the mobile communication network, such as a network node, or can be any entity outside of the mobile communication network, such as one of servers 261, 262 shown in Fig. 2, or for example a telephone terminal in a different telephone network, such as the terminal 25 shown in Fig. 2.

It may be noted that the control signalling connections 171-175 shown in Fig. 1 are only an example. Namely, in this example, the sources 10 or 14 can exchange control signals with both the basic call control entity 11 and the specific multicast management entity 13. It is, however, equally possible that there are no signalling connections 172, 173 between the source 10 or 14 and the multicast management entity 13, such that all control signalling between the source 10 or 14 and the multicast management entity 13 is handled via the basic call control entity 11, namely via connections 171, 174 and 175.

Preferably, the multicast management entity 13 manages a multicast service record that associates identifiers of destinations with multicast group identifiers, and is arranged to receive and terminate service registration requests for a multicast service from potential destinations inside and outside of the mobile communication network. The multicast service record can be kept together with the multicast management entity 13, or can be stored anywhere else in the mobile communication network. The destination identifiers can be of any desirable or suitable type compatible with the mobile communication network and the other networks in which the potential destinations may be located. For example the destination identifiers can be Internet Protocol (IP) addresses, and the multicast group identifiers can be dedicated IPv4 (version 4 of IP) or IPv6 (version 6 of IP) multicast addresses.

The potential destinations may register for a multicast service in the multicast management entity 13 by means of appropriate signalling such as IGMP or Multicast Listener Discovery (MLD) signalling, or by means of dedicated signalling procedures belonging to the mobile communication network. Such signalling messages are terminated in the multicast management entity and group management information is stored thereby, such as the clients (destinations) registered for a specific multicast group. As an example, a general "football interest" group might be defined, and clients register for that group, in order to receive any multicast service transmissions about football associated with said group.

The multicast management entity 13 is furthermore preferably arranged to receive and terminate session registration requests for a multicast session from entities inside and outside of said mobile communication network that act as multicast destinations. In other words, the multicast management entity 13 receives a dedicated session registration message from a potential destination in order to then let that destination participate in a session for the corresponding multicast group. For example, the multicast management entity 13 keeps a record of all destinations currently registered for a specific multicast service (such as the above mentioned "football interest" group), and if the multicast management entity receives a multicast transmission carrying the multicast group identifier identifying said specific group, then the transmission can be forwarded to all of the destinations registered for the session. Especially, the multicast management entity can act as a type of multicast router, in order to propagate the received multicast content to all of the registered clients in the domain of the mobile communication network.
The multicast management entity also enables the mobile network to become part of the multicast delivery tree by propagating group management information towards the multicast delivery tree external to the mobile network. Multicast routing protocols are used for this purpose. By propagating this information the mobile network becomes part of the multicast delivery tree just like any other Local Area Network.

Preferably, the multicast management entity 13 can also modify.service registration requests, e.g. in response to mobility management.

Preferably, the multicast management entity 13 comprises a control part 131 and a processing part 132, as shown in Fig. 1. Preferably, the control part 131 handles session control, and the processing part 132 handles bearer control and the transmission content, which is also indicated in Fig. 1, in that the full lines connect to the processing part 132, whereas the control signalling connects to control part 131. However, it is noted content can also be transmitted via the control part 131.

As already noted above, the structure of Fig. 1 is to be understood as a logical structure. Therefore, the control part 131 and processing part 132 may or may not be physically separated. Especially, it is possible that one control part 131 is associated with a plurality of processing parts 132, each processing part 132 being at a different location in the mobile communication network. The communication between the control part 131 and the processing part 132 can be conducted in accordance with any appropriate communication scheme, e.g. in accordance with ITU-T Recommendation H.248.

In the case of using a control part and a processor part, one of the advantages of the present invention consists in the fact that the control part 131 can select the processing part 132 based on the client (destination) distribution e.g. can select one or more appropriate processing parts in such a way that the replication of the multicast content is done as close as possible to the destination locations. Generally speaking, the control part 131 can optimise the replication of multicast content on the basis of the destination distribution, in order to reduce the burden on resources. For example, this can be done by reducing the amount of replication to the necessary minimum, said necessary minimum being determined by the destination distribution on the one hand and the (dynamic) network state and (static) network architecture on the other hand. The selection of the processing part can also be based on the required and/or available resources or load sharing mechanisms can be applied. Also, processing costs can be used as an alternative or additional selection criterion.

In the case of using a control part and a processor part, the clients (destinations) may register with the control part 131, the control part 131 can select the optimal processing part 132 and transfers the information about the registered clients to that processing part 132. In case the clients register directly with the processing part 132, the processing part 132 provides the information about the registered clients to the control part 131 for charging, analysis, statistical, etc. purposes. A dedicated new multicast protocol between the control part 131 and processing part 132 could be used, or e.g. additional messages and parameters in H.248 could be used for both cases.

In case the clients register with the control part 131, the control part 131 in turn can register with the processing part 132, i.e. all multicast traffic will pass the control part 131 on its way to the destinations. This will enable the control part 131 to collect charging and statistics related information. The control part 131 in that case extends the multicast deliver path from the registered clients via the control part 131 itself to the processing part 132 and eventually to the multicast source (if that is not the processing part 132 itself). It is also possible to not have the control part 131 register with the processing part 132, in the case where the clients register to the control part 131. The control part 131 will then, however, either request the corresponding support nodes 12 of the clients to connect to the processing part 132 (e.g. by means of multicast routing protocols) or the control part 131 requests the processing part 132 to order the support nodes 12 to do this. The support nodes 12 then become part of the multicast delivery tree. It should be noted that also unicast (possibly multiplexed) connections between the processing part 132 and the support nodes 12 may be used to transmit the multicast traffic. In the case where the mobile communication network has a circuit switched access network, gateways or internet access servers for the circuit switched domain can be used in place of the above mentioned support nodes 12. This enables multicast service provisioning to the circuit switched domain.

The multicast management entity 13 is preferably also arranged to receive and terminate session invitation requests for a multicast session from entities inside and outside of the mobile communication network that act as multicast sources, e.g. from the server 14 or the mobile station 10 shown in Fig. 1. When a multicast session is about to start, the multicast source 10 or 14 uses an appropriate signalling protocol (such as the session initiation protocol SIP or the real-time streaming protocol RTSP), to inform the multicast management entity 13 (the control part 131). This signalling can be direct (as indicated by signalling connections 172, 173) and/or indirect (as indicated by signalling connections 171, 174 and 175). This session information message at least includes the multicast group identifier, and preferably also includes information on the multicast content, such as the type of streams in the multicast transmission (e.g. video, audio, data, and the specific parameters related to each individual media stream, such as stream rate etc.). The information about the multicast content can e.g. be indicated by using the Session Description Protocol (SDP).

When the registration is done via the control part 131, the control part 131 of the multicast management entity 13 then selects the optimum processing part 132 and reserves the required resources in the network and registers with the processing part 132 to extend the multicast delivery path. Furthermore, it stores all this information in a database, said database preferably being integrated with the multicast management control part 131. The multicast management control part 131 also informs the multicast source (e.g. 10 or 14 in the example of Fig. 1) about the identifier of the multicast management processing part 132, e.g. in the form of an appropriate address in a packet exchange based network, such as an IP address. Thereby, the content (151, 152) can be delivered to the multicast management processing part 132 where e.g. a unicast to multicast conversion is done. The processing part 132 can also register with the multicast source. The processing part 132 registers to the corresponding multicast group like any other multicast client (e.g. via IGMP/MLD) or other multicast router (e.g. multicasting protocols).

The multicast management entity 13 (the control part 131 and/or the processing part 132) have information about the multicast capabilities of the destinations (e.g. stored in a database) and can decide on whether a further multicast transmission (i.e. a single transmission containing a multicast group identifier) or whether a replication and the provisioning of several multicast transmissions and/or unicast transmissions have to be implemented. In the latter case, the processing part 132 terminates the data streams of the multicast routing protocol (e.g. Protocol Independent Multicast PIM), replicates the content and uses a plurality of unicast transmissions in the access network. The corresponding addresses for the destinations (clients) are provided by the control part 131, or the processing part 132 already has the addresses, when clients register to the processing part directly.

The multicast management entity 13 may also initiate multicast transmissions on its own, for example after having received a list of multicast sessions (identifying a multicast group identifier and a multicast source) from a central data base. Then instead of waiting for incoming requests, the multicast management entity 13 itself selects a processing part 132, contacts the listed multicast sources and stores information about the multicast stream, multicast source, processing part 132, etc. in its database. Multicast services initiated by the multicast management entity 13 may also be used when store and forward mechanisms are applied to the multicast services. A store and forward service is a service in which the multicast management entity 13 stores received multicast content and forwards it with a delay. The multicast service may be downloaded by the multicast management entity 13 and the forwarding/sending can be triggered by an external event, e.g. the receipt of a trigger message or the fulfilment of a predetermined timing condition, upon which the multicast management entity 13 starts the service delivery. As another option, the multicast content does not necessarily need to be delivered to all clients simultaneously. If certain clients are not available, they may get the content later (when they are available). In that case the multicast management entity will keep track of which clients have received the information, i.e. mainly which clients where available when the multicast content was delivered to the group. Multicast management entity initiated/ordered de-registration of clients that have received the content may be used to ensure that all clients receive the content only once.

Preferably, the multicast management entity 13 is arranged in such a way, that the procedure for handling a multicast transmission comprises a routine for processing the multicast content by changing one or more parameters of the multicast content and/or changing the content itself before sending the multicast content to destinations, such as mobile stations accessing the mobile communication network. As an example, the changing of a parameter can consist in adapting a multicast stream to air interface characteristics. For example, the transmission rate of a stream can be adapted to the available bandwidth on the air interface. An example of changing the content can consist in adding specific logos for the network operator, adding commercials or filtering out specific (undesirable) content.

Furthermore, it is preferable that the multicast management entity 13 is arranged such that the procedure for handling a multicast transmission comprises a routine for processing the multicast content by merging and/or combining the multicast content of one multicast transmission with the multicast content of another multicast transmission, before sending the multicast content to its destinations, for example mobile stations accessing the mobile communication network. This is similar to the merging/combining of multiple unicast streams.

Charging information for all of the entities involved in a multicast session may be collected in the multicast management entity 13 and forwarded to corresponding billing nodes in the mobile communication networks, and to billing nodes in other networks, if necessary or desired.

Preferably, the multicast management entity 13 is arranged to perform group specific admission control and/or group specific charging and/or group specific statistics collection and/or group specific statistics evaluation for multicast groups. Group specific admission control for example means that the multicast management entity 13 controls the maximum or minimum number of simultaneous members (registered destinations for a session). Specific charging means that the tariff charged to individual destinations (subscribers) can be changed on the basis of group related conditions, e.g. a lower tariff in case more clients (destinations) receive the multicast service simultaneously. A different example is the case when a predetermined minimum number of destinations is set in order that a session be conducted, such that if the number of clients is too low, the multicast management control part 131 rejects a session invitation request from a multicast source, or does not initiate a session of its own when acting as a multicast source itself.

The multicast management entity 13 may also perform authentication and authorization and charging of the sources of the multicast transmission.

According to the present application, the multicast management entity 13 (and in particular the processing part 132) can preferably act as a source or remote source of a multicast delivery structure in case of source based multicast routing structures, or it can act as the core (also called rendezvous point) in case of core based routing structures. These two types of multicast routing structures are e.g. described in: "IP Telephony: Packet-based multimedia communications systems", by O. Hersent, D. Gurle, D. Petit, Addison-Wesley, Harlow, 2000, such that a further description is not necessary here.

Preferably, the multicast management entity 13 is arranged in such a way that it can specifically deal with multicast transmission content that comprises separable parts. Examples of multicast transmission content that contain separable parts are streams of different media type, such as video, audio and data, or different layers of scalably coded data, such as base and enhancement layers known e.g. from MPEG-4. In this case it is preferable that the procedure for determining destinations on the basis of a multicast group identifier comprises the determining of sub-groups of destinations, where each sub-group is associated with the receipt of one or more of the separable parts, and the procedure for handling a multicast transmission comprises a routine for controlling the separation of the multicast transmission content and the forwarding of respective separated parts in accordance with the determined sub-groups.

It may be noted that the definition of the sub-groups can be performed in any suitable or desirable way. For example, the sub-groups may be predefined by the network operator, and the potential destinations simply register for one of the predefined sub-groups. For example, for a predetermined number of (main) multicast groups containing an audio and a video stream, audio sub-groups can be predefined for each respective main group, such that a destination that registers for the audio sub-group only receives the audio stream, whereas a destination that registers for the main group receives the audio and the video steam. Alternatively, the multicast management entity may control the definition of sub-groups, e.g. on the basis of user request. As an example, if a destination (client) registers for a specific multicast group, e.g. the above mentioned football interest group, which for the purpose of the present example will be assumed to provide a video and an audio stream, and the destination at the same time indicates that it only wishes to receive the audio stream, then the multicast management entity can (dynamically) define an audio sub-group. Such a definition can also be coupled to a predetermined condition, e.g. that a predetermined minimum number of requests for the audio-only service is present.

The procedures for registering to a sub-group can be like the above described procedures for registering to a group in the general case. Each sub-group will have its own multicast sub-group identifier and thereby otherwise be like any other multicast group.

In other words, it is preferable that the multicast management entity 13 is capable of handling multicast services for heterogeneous clients (destinations). Heterogeneous clients e.g. have differing quality of service requirements, capabilities and preferences. For example, some mobile stations may only be equipped to receive audio, or only audio and data. Also, the heterogeneous destinations can be due to different access networks e.g. one access network for packet switching based mobile terminals and one access network for circuit switched mobile terminals, where e.g. the circuit switched mobile terminals may only receive audio information.

In accordance with the present invention, it is possible to let the multicast management entity 13 separate a received multicast content into a plurality of streams, where the separation and forwarding is done on the basis of separate multicast sub-groups. For example, a destination can select which media streams to receive, which in turn can also be coupled to specific billing (e.g. only receiving an audio stream is less expensive than receiving an audio and a video stream).

Equally, if the multicast content contains layered scalable coding with base and enhancement layers, the enhancement layer for example increasing the frame rate or spatial resolution, then multicast sub-groups can be assigned per layer.

The function of separating multicast transmission content can be implemented in many different ways, depending on individual desires, requirements and constraints. For example, it is possible that the multicast management entity is arranged to simply split the content belonging to a predetermined multicast group ("main" group) into parts and/or combinations of parts, each part or combination of parts being associated with its own sub-group (e.g. predefined by the network operator) and therefore its own multicast sub-group identifier, and then forward the respective sub-group transmissions using the corresponding multicast sub-group identifier, without having any knowledge of the clients registered for the sub-groups. In other words, the clients do not register with the multicast management entity, but rather with an entity further down along the multicast tree.

On the other hand, the multicast management entity may also be arranged to keep a record of the clients (destinations), in order to directly determine which clients are registered for which sub-group. This is e.g. necessary in case the multicast management entity replicates the content and forward it as unicast transmissions to the individual destinations. In case the multicast management entity is actively involved in the registration management, it may have to use additional multicast addresses and group management routines for the different subgroups. This may imply that it has to inform the clients about the multicast subgroup addresses and content in order for these clients to know what to register for.

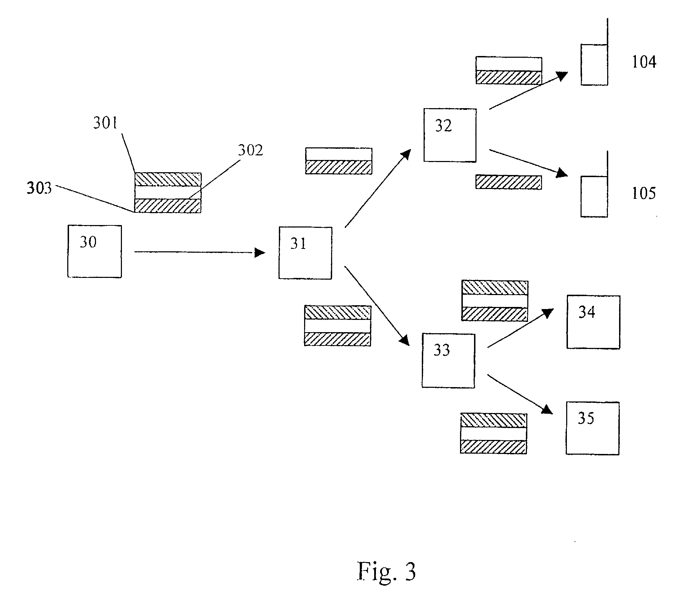

An example is shown in Fig. 3. A multicast source 30 sends out a transmission containing a content stack 301, 302, 303, where the content can be separated into these parts 301, 302, and 303. For example, 303 can be an audio stream, 302 a data stream and 301 a video stream, or 303 can be a base layer, 302 a first enhancement layer and 301 a second enhancement layer. Then, a first entity 31, e.g. a first multicast management entity 13 can forward one multicast transmission containing all three parts 301-303 to an entity 33, and send out a multicast transmission containing only streams 302 and 303 to another entity 32, said entity 32 e.g. being a multicast management processing part 132. This entity 32 can in turn separate the received multicast transmission further, e.g. by forwarding the single part 303 to one mobile station 105 and the transmission containing 302 and 303 to another mobile station 104. On the other hand, the entity 33 can replicate and forward the full stack 301, 303 to corresponding terminal stations 34 and 35.

For example, multiple RTP (real-time transport protocol RfC1889) streams can be used in case of multiple media or layered coding, each RTP stream being based on a dedicated multicast group. Clients (destinations) register for the multicast sub-groups of the streams that they are interested in, or that they are able to receive a process. The multicast source does not know and does not care which layers or media the different clients receive or wish to receive, since it sends all the streams and media in the general group, and the multicast management entity provides the processing according to sub-groups.

With the presently described embodiment of the invention, the multicast management entity 13 can preferably itself apply layered coding or handle multiple media streams (possibly after splitting a multiplexed media stream). The multicast management entity 13 is arranged to split combined media streams or combined coding into separate media streams or separate codec layers. Possibly this is done after a transcoding of the streams. Alternatively, the multicast management entity 13 instructs the multicast source to send media streams in a required or desired format, either within an existing multicast session or by establishing a new multicast session. As an option, the multicast management entity 13 performs a capability request to the multicast source, in order to check and request whether the multicast source can provide the stream (generally the multicast content) in the required format. The multicast management entity then allocates multicast sub-group identifiers for the different media streams and/or different codecs, and informs the clients (destinations) about the purpose of the different multicast sub-groups, and the corresponding data (coding) inside each of the sub-groups. This may be done by a general multicast distribution channel for interested parties, to a dedicated multicast group, via a web page or any kind of default configuration mechanism. Clients can then subscribe/register to the multicast sub-group that they are able to handle and/or that they are interested in and/or they are simply willing to pay for.

This simplifies the processing in the multicast management entity, and is actually an embedded negotiation procedure between the multicast management entity and the clients.

According to a preferred embodiment, the multicast management entity 13 is a part of a multimedia handling system of the mobile communication network, where the basic call handling entity 11 for handling communications to and from individual mobile stations accessing said mobile communication network also is a part of said multi media handling system. More preferably, the present invention is applied to a mobile communication system arranged in accordance with the technical specifications of the 3rd Generation Partnership Project (3GPP) as specified by 3G TS 23.002, e.g. V5.30 of June 2001, 3G TS 23.228, e.g. V5.1.0 of June 2001, and 3G TS 23.060, e.g. V3.6.0 of January 2001, which are herewith all incorporated by reference.

In the context of a 3GPP architecture, the above mentioned multimedia handling system can be the Internet Protocol Multimedia Subsystem (IMS), the call handling entity 11 can comprise one or more Call State Control Functions (CSCF; i.e. one or more of a proxy CSCF, interrogating CSCF and serving CSCF), and said multicast management entity 13 can be a Multimedia Resource Function (MRF), where the control part 131 can be a Multimedia Resource Function Controller (MRFC), and the processing part 132 can be a Multimedia Resource Function Processor (MRFP). The support node 12 can then be a Gateway GPRS (General Packet Radio Service) Support Node (GGSN).

The location register function in the GGSN stores subscription and routing information (needed to tunnel packet data traffic destined for a GPRS mobile station to the GGSN where the mobile station is registered) for each subscriber for which the GGSN has at least one PDP (Packet Data Protocol) context active.

As already mentioned, the MRF is preferably split into a Multimedia Resource Function Controller (MRFC) and Multimedia Resource Function Processor (MRFP). The functions of the MRFC and MRFP are preferably as follows: the MRFC controls the media stream resources in the MRFP, and/or interprets information coming from an application server and a serving CSCF (e.g. session identifier) and controls the MRFP accordingly, and/or generates CDRs (Call Detail Records), whereas the MRFP performs bearer control on the Gi-interface (a Gi interface is a reference point between GPRS and an external packet data network), and/or provides resources to be controlled by the MRFC, and/or mixes incoming media streams (e.g. for multiple parties), and/or acts as a media stream source (for multimedia announcements), and/or performs media stream processing (e.g. audio transcoding, media analysis).

Additionally, an Application Server may be provided (see e.g. servers 261, 262 in Fig. 2). The tasks of an Application Server (AS) with regard to MRF, in order to provide conferencing facilities, may e.g. be the following: conference booking and provision of booking information (e.g. start time, duration, list of participants) to the MRFC, and/or provide a floor control mechanism, by which end users (e.g. participants, chairman) can influence the floor and provide information to the MRFC on how incoming media streams should be mixed and distributed accordingly.

The protocols used for control signalling and content transmission can be chosen as is suitable or desirable. As an example, these communication can be conducted in accordance with
- **SIP**, Session Initiation Protocol (RFC 2543); control of multimedia sessions, and/or
- **SDP**, Session Description Protocol (RFC 227); description of multimedia sessions, and/or
- **SAP**, Session Announcement Protocol (draft); advertisement of multimedia sessions via multicasting, and/or
- **RT**(C)P, Real-Time Transport (Control) Protocol (RFC 1889); transport of real-time data and provision of quality of service (QoS) feedback, and/or
- **RTSP**, Real-Time Streaming Protocol (RFC 2326); streaming media delivery control.

The Session Initiation Protocol is an application-layer control (signalling) protocol for creating, modifying and terminating sessions with one or more participants. These sessions include Internet multimedia conferences, Internet telephone calls and multimedia distribution. Members in a session can communicate via multicast or via a mesh of unicast relations, or a combination of these.

SIP invitations used to create sessions carry session descriptions which allow participants to agree on a set of compatible media types. SIP supports user mobility by proxying and redirecting requests to the user's current location. Users can register their current location. SIP is not tied to any particular conference control protocol. SIP is designed to be independent of the lower-layer transport protocol and can be extended with additional capabilities.

The Session Description Protocol (SDP) is used to describe multimedia sessions for the purpose of session announcement, session invitation, and other forms of multimedia session initiation. SDP is purely a format for session description, i.e. a well-defined format for conveying sufficient information to discover and participate in a multimedia session. SDP uses different transport protocols as appropriate, including SAP, SIP, and the Real-time Streaming Protocol (RTSP).

An SDP session description includes information such as: the type of media (video, audio, etc.), the transport protocol (RTP/UDP/IP, H.320, etc.), the format of the media (H.261 video, MPEG video, etc.).

A session description consists of a session-level description (details that apply to the whole session and all media streams) and optionally several media-level descriptions (details that apply to a single media stream).

The Session Announcement Protocol (SAP) is used to announce multicast multimedia conferences and other multicast sessions. SAP periodically multicasts packets containing a description of the session (SDP) , to a well known multicast address and port. Potential remote participants can use the session description to start the tools required to participate in the session. The SAP announcer is not aware of the presence or absence of any SAP listeners.

SAP is intended to announce the existence of long-lived wide-area multicast sessions.

The Real-time Transport Protocol (RTP) provides end-to-end network transport functions suitable for applications transmitting real-time data, such as audio, video or simulation data, over multicast or unicast network services. The functions provided by RTP include payload type identification, sequence numbering, timestamping, and delivery monitoring. RTP is also suitable as a protocol for real-time transmission of audio and video over UDP and IP multicast.

The data transport is augmented by a control protocol (RTCP), which is used to monitor the QoS and to convey information about the participants in an ongoing session. Each media stream in a conference is transmitted as a separate RTP session (with a separate RTCP stream). RTCP reports provide statistics about the data received from a particular source, such as the number of packets lost since the previous report, the cumulative number of packets lost, the inter-arrival jitter, etc.

After session establishment (possibly after a distribution), the QoS can be monitored by RTCP. In case the required QoS can not be fulfilled any longer, a new distribution decision could be made.

Both RTP and RTCP have been engineered for multicast.

The Real-Time Streaming Protocol (RTSP) provides a standard way to remote control a multimedia server. While primarily aimed at web-based media-on-demand services, RTSP is also well suited to provide VCR-like controls for audio and video streams, and to provide playback and record functionality of RTP data streams. A client can specify that an RTSP server plays a recorded multimedia session into an existing multicast-based conference, or can specify that the server should join the conference and record it.

The above described embodiments, either individually or in combination with one another, can provide the following advantages:
- point-to-multipoint or multicast services in a UMTS network,
- network operator controlled group management, group admission control and group charging capabilities for multicast services,
- the integration of a multicast media manipulation unit and a local multicast router (in the multicast management entity) provides efficient stream handling and additional capabilities,
- the basic call handling entity (e.g. a S-CSCF) allocates the multicast management control part (e.g. a MRFC), and the multicast management control part allocates the multicast management processing part (e.g. a MRFP) as close as possible to the destinations, when the multicast management processing part must already take care of the replication of the multicast stream,
- support for heterogeneous clients by using dedicated multicast groups for layered coding and multiple media streams,
- same stream manipulation components (in the multicast management entity) as specified for unicast services are used for multicast services (after terminating or analyzing the content of the multicast routing protocols),
- store and forward multicast service provisioning (e.g. remote multicast service resource pool for third party multicast service providers). This can also be viewed as a caching of multicast services closer to the destinations.
- proxy function for multicast (or more general point-to-multipoint) service streams.

The network entity of the of present invention can be embodied by hardware or any suitable combination of software and hardware, and the control method of the present invention may be embodied by software. Consequently, the present invention may also be embodied by a data carrier or data storage device carrying such software.

The term "entity" refers to a distinguishable network part that is logically identifiable, which has one or more specific functionalities, and which may be located in one physical unit, but which can also be spread out over several physical units.

Although the present invention has been described on the basis of preferred embodiments, the described details only serve to provide the skilled person with a complete understanding, but the detailed embodiments are not intended to restrict the scope of the invention. Much rather, the scope of the invention is defined by the appended claims, in which reference numerals only serve to increase understanding but also do not restrict the scope.

## Claims

1. A network entity (13) for use in a communication network and arranged to
- control the receipt and generation of multicast transmissions (151, 152) in said communication network, a multicast transmission being a transmission that carries transmission content and a multicast group identifier, said multicast group identifier being an identifier for a group of destinations (16) associated with said multicast transmission,
- conduct a first procedure for determining destinations (16) for a multicast transmission (151, 152) on the basis of a multicast group identifier, and
- conduct a second procedure for handling a multicast transmission (151, 152, 153) on the basis of the outcome of said first procedure, where said second procedure comprises routines for one or more of routing, processing, terminating and originating multicast transmissions,
**characterized in that**
said second procedure comprises a routine for processing said multicast content by changing one or more parameters of said multicast content and/or changing the content, before forwarding said multicast content.

2. The network entity (13) of claim 1, **characterized by** being arranged to receive and terminate service registration requests for a multicast service from entities inside and outside of said communication network that act as multicast destinations (16), and to manage a multicast service record that associates identifiers of destinations (16) with multicast group identifiers.

3. The network entity (13) of claim 1 or 2, **characterized by** being arranged to receive and terminate session registration requests for a multicast session from entities inside and outside of said communication network that act as multicast destinations (16).

4. The network entity (13) of one of claims 1 to 3, by being arranged to receive and terminate session invitation requests for a multicast session from entities inside and outside of said communication network that act as multicast sources (10, 14).

5. The network entity (13) of one of claims 1 to 4, **characterized in that** said second procedure comprises a selection routine for selecting one or more locations of replicating said multicast transmission content on the basis of the outcome of said first procedure.

6. The network entity (13) of claim 5, **characterized in that** said selection routine is arranged to optimise the replication of multicast content on the basis of the destination distribution, in order to reduce the burden on resources.

7. The network entity (13) of one of claims 1 to 6, **characterized in that** said second procedure comprises a routine for processing said multicast content by merging and/or combining the multicast content of one multicast transmission with the multicast content of another multicast transmission, before forwarding said multicast content.

8. The network entity (13) of one of claims 1 to 7, **characterized by** being arranged to perform group specific admission control and/or group specific charging and/or group specific statistics collection and/or group specific statistics evaluation for said multicast groups.

9. The network entity (13) of one of claims 1 to 8, **characterized in that** if said multicast transmission content comprises separable parts (301, 302, 303), said first procedure comprises determining sub-groups of destinations, each sub-group being associated with the receipt of one or more of said separable parts (301-303), and said second procedure comprises a routine for controlling the separation of said multicast transmission content and the forwarding of respective separated parts (301-303) in accordance with sub-groups determined in said first procedure.

10. The network entity (13) of claim 9, **characterized in that** said separable parts (301-303) are streams of different media type.

11. The network entity (13) of claim 9 or 10, **characterized in that** said separable parts (301-303) are different layers of scalably coded data.

12. The network entity (13) of one of claims 1 to 11, **characterized by** comprising a control part (131) and a processing part (132), said control part (131) handling session control and said processing part (132) handling bearer control in said communication network.

13. The network entity (13) of one of claims 1 to 12, **characterized in that** said communication network is a mobile communication network comprising a first network part (20) for providing mobile stations (10; 101, 102, 103, 104, 105) access to said mobile communication network, and a second network part (21) for controlling communications to and from said mobile stations (10; 101-105), where said network entity (13) is arranged to be connected to said second network part (21).

14. The network entity (13) of claim 13, **characterized in that** said network entity (13) is part of a multimedia handling system of said mobile communication network, said multimedia handling system furthermore comprising a basic call handling entity (11) for handling communications to and from individual mobile stations accessing said mobile communication network.

15. The network entity (13) of claim 14, **characterized in that** said mobile communication system is arranged in accordance with the technical specifications of the 3rd Generation Partnership Project, and said multimedia handling system is an Internet Protocol Multimedia subsystem, said call handling entity (11) is a Call State Control Function and said multicast management entity (13) is a Multimedia Resource Function.

16. A control method for a network entity (13) in a communication network, where said network entity (13) is arranged to control the receipt and generation of multicast transmissions in said communication network, a multicast transmission being a transmission that carries transmission content and a multicast group identifier, said multicast group identifier being an identifier for a group of destinations associated with said multicast transmission, said method comprising:
- conducting a first procedure for determining destinations for a multicast transmission on the basis of a multicast group identifier, and
- conducting a second procedure for handling a multicast transmission on the basis of the outcome of said first procedure, where said second procedure comprises routines for one or more of routing, processing, terminating and originating multicast transmissions, and where said second procedure comprises a routine for processing said multicast content by changing one or more parameters of said multicast content and/or changing the content, before forwarding said multicast content.

17. A computer program including executable instructions, which when executed on a computer device, cause the computer device to carry out the method steps of claim 16.

18. A computer readable data carrier storing a computer program including executable instructions, which when executed on a computer device, cause the computer device to carry out the method steps of claim 16.

## Patentansprüche

1. Netzwerkeinheit (13) zur Verwendung in einem Kommunikationsnetzwerk, und welche dazu angeordnet ist, um:
den Empfang und die Erzeugung von Mehrfachsendungs-Übertragungen (151, 152) im Kommunikationsnetzwerk zu steuern, wobei eine Mehrfachsendungs-Übertragung eine Übertragung ist, welche einen Übertragungsinhalt und eine Mehrfachsendungs-Gruppenkennung überträgt, wobei die Mehrfachsendungs-Gruppenkennung eine Kennung für eine Gruppe an Zielen (16) ist, welche mit der Mehrfachsendungs-Übertragung in Zusammenhang stehen,
einen ersten Ablauf zum Bestimmen von Zielen (16) für eine Mehrfachsendungs-Übertragung (151, 152) auf Basis einer Mehrfachsendungs-Gruppenkennung durchzuführen, und
einen zweiten Ablauf zum Handhaben einer Mehrfachsendungs-Übertragung (151, 152, 153) auf Basis des Ergebnisses des ersten Ablaufs durchzuführen, wobei der zweite Ablauf Routinen für eine Weiterleitung und/oder Verarbeitung und/oder Beendigung und/oder Schaffung von Mehrfachsendungs-Übertragungen enthält,
**dadurch gekennzeichnet, dass**
der zweite Ablauf eine Routine zum Verarbeiten des Mehrfachsendungs-Inhalts durch Ändern eines oder mehrerer Parameter des Mehrfachsendungs-Inhalts und/oder Ändern des Inhalts enthält, bevor der Mehrfachsendungs-Inhalt weitergeleitet wird.

2. Netzwerkeinheit (13) nach Anspruch 1, **dadurch gekennzeichnet, dass** sie derart angeordnet ist, um Dienstregistrierungs-Anfragen nach einem Mehrfachsendungs-Dienst von Einheiten innerhalb und außerhalb des Kommunikationsnetzwerks, welche als Mehrfachsendungs-Ziele (16) wirken, zu Empfangen und zu Beendigen, und eine Mehrfachsendungs-Dienstaufzeichnung zu verwalten, welche Kennungen von Zielen (16) mit Mehrfachsendungs-Gruppenkennungen beiordnet.

3. Netzwerkeinheit (13) nach Anspruch 1 oder 2, **dadurch gekennzeichnet, dass** sie derart angeordnet ist, um Sitzungsregistrierungs-Anfragen für eine Mehrfachsendungs-Sitzung von Einheiten innerhalb und außerhalb des Kommunikationsnetzwerks, welche als Mehrfachsendungs-Ziele (16) wirken, zu Empfangen und zu Beenden.

4. Netzwerkeinheit (13) nach einem der Ansprüche 1 bis 3, welche derart angeordnet ist, um Sitzungsaufforderungs-Anfragen für eine Mehrfachsendungs-Sitzung von Einheiten innerhalb und außerhalb des Kommunikationsnetzwerks, welche als Mehrfachsendungs-Quellen (10, 14) wirken, zu Empfangen und zu Beenden.

5. Netzwerkeinheit (13) nach einem der Ansprüche 1 bis 4, **dadurch gekennzeichnet, dass** der zweite Ablauf eine Auswahlroutine zum Auswählen einer oder mehrerer Stellen zum Nachbilden des Mehrfachsendungs-Übertragungsinhaltes auf Basis des Ergebnisses vom ersten Ablauf enthält.

6. Netzwerkeinheit (13) nach Anspruch 5, **dadurch gekennzeichnet, dass** die Auswahlroutine derart angeordnet ist, dass sie die Nachbildung eines Mehrfachsendungs-Inhalts auf Basis der Zielverteilung optimiert, um die Ressourcenlast zu reduzieren.

7. Netzwerkeinheit (13) nach einem der Ansprüche 1 bis 6, **dadurch gekennzeichnet, dass** der zweite Ablauf eine Routine zum Verarbeiten des Mehrfachsendungs-Inhalts durch Zusammenlegen und/oder Kombinieren des Mehrfachsendungs-Inhalts von einer Mehrfachsendungs-Übertragung mit dem Mehrfachsendungs-Inhalt von einer weiteren Mehrfachsendungs-Übertragung enthält, bevor der Mehrfachsendungs-Inhalt weitergeleitet wird.

8. Netzwerkeinheit (13) nach einem der Ansprüche 1 bis 7, **dadurch gekennzeichnet, dass** sie derart angeordnet ist, um eine gruppenspezifische Durchlasssteuerung und/oder gruppenspezifische Abrechnung und/oder gruppenspezifische Statistiksammlung und/oder gruppenspezifische Statistikbewertung für die Mehrfachsendungs-Gruppen durchzuführen.

9. Netzwerkeinheit (13) nach einem der Ansprüche 1 bis 8, **dadurch gekennzeichnet, dass**, wenn der Mehrfachsendungs-Übertragungsinhalt teilbare Teile (301, 302, 303) enthält, der erste Ablauf ein Bestimmen von Untergruppen an Zielen enthält, wobei jede Untergruppe mit dem Empfang von einem oder mehreren der teilbaren Teile (301-303) in Zusammenhang steht, und der zweite Ablauf eine Routine zum Steuern der Teilung des Mehrfachsendungs-Übertragungsinhalts und der Weiterleitung von jeweils geteilten Teilen (301-303) gemäß von im ersten Ablauf bestimmten Untergruppen enthält.

10. Netzwerkeinheit (13) nach Anspruch 9, **dadurch gekennzeichnet, dass** die teilbaren Teile (301-303) Ströme vom unterschiedlichen Medientyp sind.

11. Netzwerkeinheit (13) nach Anspruch 9 oder 10, **dadurch gekennzeichnet, dass** die teilbaren Teile (301-303) unterschiedliche Schichten an skalierbar codierten Daten sind.

12. Netzwerkeinheit (13) nach einem der Ansprüche 1 bis 11, **dadurch gekennzeichnet, dass** sie einen Steuerteil (131) und einen Verarbeitungsteil (132) enthält, wobei der Steuerteil (131) eine Sitzungssteuerung handhabt und der Verarbeitungsteil (132) eine Überbringersteuerung im Kommunikationsnetzwerk handhabt.

13. Netzwerkeinheit (13) nach einem der Ansprüche 1 bis 12, **dadurch gekennzeichnet, dass** das Kommunikationsnetzwerk ein Mobilkommunikationsnetzwerk ist, welches einen ersten Netzwerkteil (20) zum Bereitstellen eines Zugriffs von Mobilstationen (10; 101, 102, 103, 104, 105) auf das Mobilkommunikationsnetzwerk, und einen zweiten Netzwerkteil (21) zum Steuern von Kommunikationen zu und von den Mobilstationen (10; 101-105) enthält, wobei die Netzwerkeinheit (13) zur Verbindung an den zweiten Netzwerkteil (21) angeordnet ist.

14. Netzwerkeinheit (13) nach Anspruch 13, **dadurch gekennzeichnet, dass** die Netzwerkeinheit (13) ein Teil eines Multimedia-Handhabungssystems des Mobilkommunikationsnetzwerks ist, wobei das Multimedia-Handhabungssystem ferner eine Grundruf-Handhabungseinheit (11) zum Handhaben von Kommunikationen zu und von einzelnen Mobilstationen enthält, welche auf das Mobilkommunikationsnetzwerk zugreifen.

15. Netzwerkeinheit (13) nach Anspruch 14, **dadurch gekennzeichnet, dass** das Mobilkommunikationssystem gemäß den technischen Spezifikationen des Partnerschaftsprojekts der dritten Generation angeordnet ist, und dass das Multimedia-Handhabungssystem ein Internetprotokoll Multimedia-Untersystem ist, wobei die Ruf-Handhabungseinheit (11) eine Rufzustands-Steuerfunktion ist und die Mehrfachsendungs-Verwaltungseinheit (13) eine Multimedia-Ressourcenfunktion ist.

16. Steuerverfahren für eine Netzwerkeinheit (13) in einem Kommunikationsnetzwerk, wobei die Netzwerkeinheit (13) dazu angeordnet ist, um den Empfang und die Erzeugung von Mehrfachsendungs-Übertragungen im Kommunikationsnetzwerk zu steuern, wobei eine Mehrfachsendungs-Übertragung eine Übertragung ist, welche einen Übertragungsinhalt und eine Mehrfachsendungs-Gruppenkennung überträgt, wobei die Mehrfachsendungs-Gruppenkennung eine Kennung für eine Gruppe an Zielen ist, welche mit der Mehrfachsendungs-Übertragung in Zusammenhang stehen, wobei das Verfahren enthält:
Durchführen eines ersten Ablaufs zum Bestimmen von Zielen für eine Mehrfachsendungs-Übertragung auf Basis einer Mehrfachsendungs-Gruppenkennung, und
Durchführen eines zweiten Ablaufs zum Handhaben einer Mehrfachsendungs-Übertragung auf Basis des Ergebnisses des ersten Ablaufs, wobei der zweite Ablauf Routinen für eine Weiterleitung und/oder Verarbeitung und/oder Beendigung und/oder Schaffung von Mehrfachsendungs-Übertragungen enthält, und wobei der zweite Ablauf eine Routine zum Verarbeiten des Mehrfachsendungs-Inhalts durch Ändern eines oder mehrerer Parameter des Mehrfachsendungs-Inhalts und/oder Ändern des Inhalts enthält, bevor der Mehrfachsendungs-Inhalt weitergeleitet wird.

17. Computerprogramm mit ausführbaren Anweisungen, welches, wenn es auf einer Computervorrichtung ausgeführt wird, die Computervorrichtung dazu veranlasst die Verfahrensschritte von Anspruch 16 durchzuführen.

18. Computerlesbarer Datenträger, welcher ein Computerprogramm speichert, welches ausführbare Anweisungen enthält, welche, wenn sie in einer Computervorrichtung ausgeführt werden, die Computervorrichtung dazu veranlassen die Verfahrensschritte von Anspruch 16 durchzuführen.

## Revendications

1. Entité de réseau (13) devant être utilisée dans un réseau de communication et conçue pour :
- commander la réception et la production de transmissions de multidiffusion (151, 152) dans ledit réseau de communication, une transmission de multidiffusion étant une transmission qui effectue la transmission d'un contenu et d'un identificateur de groupe de multidiffusion; ledit identificateur de groupe de multidiffusion étant un identificateur pour un groupe de destinations (16) associées à ladite transmission de multidiffusion,
- appliquer une première procédure pour déterminer des destinations (16) pour une transmission de multidiffusion (151, 152) sur la base d'un identificateur de groupe de multidiffusion, et
- appliquer une seconde procédure pour gérer une transmission de multidiffusion (151, 152, 153) sur la base du résultat de ladite première procédure, ladite seconde procédure comprenant des programmes pour un ou plusieurs de l'acheminement, du traitement, de la terminaison et de l'émission de transmissions de multidiffusion,
**caractérisée en ce que** :
ladite seconde procédure comprend un programme pour traiter ledit contenu de multidiffusion en modifiant un ou plusieurs paramètres dudit contenu de multidiffusion et/ou en modifiant le contenu avant de réacheminer ledit contenu de multidiffusion.

2. Entité de réseau (13) selon la revendication 1, **caractérisée par le fait qu'**elle est conçue pour recevoir et terminer des demandes d'enregistrement à un service, pour un service de multidiffusion provenant d'entités se trouvant à l'intérieur et à l'extérieur dudit réseau de communication, qui jouent le rôle de destinations de multidiffusion (16), et pour gérer un enregistrement de service de multidiffusion qui associe des identificateurs de destinations (16) à des identificateurs de groupes de multidiffusion.

3. Entité de réseau (13) selon la revendication 1 ou 2, **caractérisée par le fait qu'**elle est conçue pour recevoir et terminer des demandes d'enregistrement de session, pour une session de multidiffusion provenant d'entités se trouvant à l'intérieur et à l'extérieur dudit réseau de communication, qui jouent le rôle de destinations de multidiffusion (16).

4. Entité de réseau (13) selon l'une des revendications 1 à 3, **caractérisée en ce qu'**elle est conçue pour recevoir et terminer des demandes d'invitation à une session, pour une session de multidiffusion provenant d'entités se trouvant à l'intérieur et à l'extérieur dudit réseau de communication, qui jouent le rôle de sources de multidiffusion (10, 14).

5. Entité de réseau (13) selon l'une des revendications 1 à 4, **caractérisée en ce que** ladite seconde procédure comprend un programme de sélection pour sélectionner un ou plusieurs sites de duplication dudit contenu de transmission de multidiffusion sur la base du résultat de ladite première procédure.

6. Entité de réseau (13) selon la revendication 5, **caractérisée en ce que** ledit programme de sélection est conçu pour optimiser la duplication d'un contenu de multidiffusion sur la base de la répartition des destinations, afin de réduire la charge imposée aux ressources.

7. Entité de réseau (13) selon l'une des revendications 1 à 6, **caractérisée en ce que** ladite seconde procédure comprend un programme pour traiter ledit contenu de multidiffusion en fusionnant et/ou en combinant le contenu de multidiffusion d'une transmission de multidiffusion au contenu de multidiffusion d'une autre transmission de multidiffusion avant de réacheminer ledit contenu de multidiffusion.

8. Entité de réseau (13) selon l'une des revendications 1 à 7, **caractérisée en ce qu'**elle est conçue pour effectuer une commande d'admission spécifique des groupes et/ou une tarification spécifique des groupes et/ou un recueil de statistiques spécifique d'un groupe et/ou une évaluation de statistiques spécifique des groupes pour lesdits groupes de multidiffusion.

9. Entité de réseau (13) selon l'une des revendications 1 à 8, **caractérisée en ce que** ledit contenu de transmission de multidiffusion comprend des parties séparables (301, 302, 303), **en ce que** ladite première procédure comprend la détermination de sous-groupes de destinations, chaque sous-groupe étant associé à la réception d'une ou plusieurs desdites parties séparables (301-303), et ladite seconde procédure comprend un programme pour commander la séparation dudit contenu de transmission de multidiffusion et pour retransmettre des parties séparées respectives (301-303) selon les sous-groupes déterminés dans ladite première procédure.

10. Entité de réseau (13) selon la revendication 9, **caractérisée en ce que** lesdites parties séparables (301-303) sont des flux de différents types de média.

11. Entité de réseau (13) selon la revendication 9 ou 10, **caractérisée en ce que** lesdites parties séparables (301-303) sont des couches différentes de données codées à échelle modifiable.

12. Entité de réseau (13) selon les revendications 1 à 11, **caractérisée par le fait qu'**elle comprend une partie de commande (131) et une partie de traitement (132), ladite partie de commande (131) gérant la commande de session et ladite partie de traitement (132) gérant la commande de support dans ledit réseau de communication.

13. Entité de réseau (13) selon l'une des revendications 1 à 12, **caractérisée en ce que** ledit réseau de communication est un réseau de communication mobile comprenant une première partie de réseau (20) pour permettre à des stations mobiles (10 ; 101, 102, 103, 104, 105) d'accéder audit réseau de communication mobile, et une seconde partie de réseau (21) pour commander les communications vers et en provenance desdites stations mobiles (10 ; 101-105), ladite entité de réseau (13) étant conçue pour être connectée à ladite seconde partie de réseau (21).

14. Entité de réseau (13) selon la revendication 13, **caractérisée en ce que** ladite entité de réseau (13) fait partie d'un système de gestion multimédia dudit réseau de communication mobile, ledit système de gestion multimédia comprenant en outre une entité de gestion d'appels de base (11) pour gérer des communications vers et en provenance de stations mobiles individuelles accédant audit réseau de communication mobile.

15. Entité de réseau (13) selon la revendication 14, **caractérisée en ce que** ledit système de communication mobile est conçu conformément aux spécifications techniques du Projet de Partenariat de 3^{ème} Génération et ledit système de gestion multimédia est un sous-système Multimédia à Protocole Internet, ladite entité de gestion d'appel (11) est une Fonction de Commande d'Etat d'Appel et ladite entité de gestion de multidiffusion (13) est une Fonction de Ressource Multimédia.

16. Procédé de commande d'une entité de réseau (13) dans un réseau de communication, ladite entité de réseau (13) étant conçue pour commander la réception et la production de transmissions de multidiffusion dans ledit réseau de communication, une transmission de multidiffusion étant une transmission qui transporte un contenu de transmission et un identificateur de groupe de multidiffusion, ledit identificateur de groupe de multidiffusion étant un identificateur pour un groupe de destinations associées à ladite transmission de multidiffusion, ledit procédé comprenant :
- l'application d'une première procédure pour déterminer des destinations pour une transmission de multidiffusion sur la base d'un identificateur de groupe de multidiffusion, et
- l'application d'une seconde procédure pour gérer une transmission de multidiffusion sur la base du résultat de ladite première procédure, ladite seconde procédure comprenant des programmes pour un ou plusieurs de l'acheminement, du traitement, de la terminaison et de l'émission de transmissions de multidiffusion, et ladite seconde procédure comprenant un programme pour traiter ledit contenu de multidiffusion en modifiant un ou plusieurs paramètres dudit contenu de multidiffusion et/ou en modifiant le contenu avant de réacheminer ledit contenu de multidiffusion.

17. Programme informatique comportant des instructions exécutables qui, lorsqu'elles sont exécutées sur un dispositif informatique, provoquent l'exécution par le dispositif informatique des étapes du procédé selon la revendication 16.

18. Support de données lisible par ordinateur stockant un programme informatique comportant des instructions exécutables qui, lorsqu'elles sont exécutées sur un dispositif informatique, ont pour effet que le dispositif informatique exécute les étapes du procédé selon la revendication 16.
